# EUROPEAN PATENT APPLICATION

(11) **EP 3 089 538 A1**
(43) Date of publication of application: **02.11.2016**
(21) Application number: 14875100.1
(22) Date of filing: 26.12.2014
(51) Int. Cl.: H04W 72/12, H04W 74/04, H04W 84/18

(54) **RADIO COMMUNICATION APPARATUS, RADIO COMMUNICATION SYSTEM, AND RADIO COMMUNICATION METHOD**

(30) Priority: 26.12.2013 JP 2013270322
(71) Applicant: Kabushiki Kaisha Toshiba, Minato-ku Tokyo 105-8001 (JP)
(72) Inventor: NAKATANI, Hiroshi, Tokyo 105-8001 (JP); OHNISHI, Naoya, Tokyo 105-8001 (JP); TAKANAKA, Tooru, Tokyo 105-8001 (JP); YAMAMOTO, Keiji, Tokyo 105-8001 (JP); OGAWA, Jumpei, Tokyo 105-8001 (JP); OCHIAI, Makoto, Tokyo 105-8001 (JP)
(74) Representative: Moreland, David
(86) International application number: PCT/JP2014/084586
(87) International publication number: WO 2015/099142

(57) **Abstract**

According to an embodiment, a wireless communication device is applicable to a wireless communication system having a plurality of wireless communication devices. The wireless communication device includes a wireless section, a storage section, a communication control section, a response confirmation section and a schedule modification section. The wireless section executes a communication task in which the wireless communication device transmits and receives a wireless signal to and from another wireless communication device. The storage section stores schedule information indicative of a time when the communication task is permitted to be executed. The communication control section controls execution of the communication task based on the schedule information. The response confirmation section confirms a reception response from the another wireless communication device. The schedule modification section modifies the schedule information based on a result for the reception response from the response confirmation section.

## Description

### Technical Field

The present invention relates to a wireless communication device, a wireless communication system, and a wireless communication method in which wireless communication is performed with one or more other wireless communication devices during a predetermined time within a given cycle.

### Background Art

A multi-hop wireless network is known in which not only do wireless communication devices communicate directly with each other, each wireless communication device can also communicate with a wider range of wireless communication devices via other wireless communication devices. In the multi-hop wireless network, when individual wireless communication devices perform wireless communications at respective timings, communications interference occurs when the timing of transmissions accidentally coincide. Interference between communications precludes normal transmission and reception of data, resulting in the need to retransmit data. As a technique for preventing interference between communications, a time-division synchronous communication scheme is known.

The time-division synchronous communication scheme is a scheme in which wireless communication devices joining in communication perform transmission or reception only during a predetermined time. This scheme enables avoiding communication interference among wireless communication devices in the same network. This allows suppression of an unexpected extension of a communication duration involved in retransmission resulting from communication interference.

The time-division synchronous communication scheme has been increasingly frequently applied in the field of, for example, a wireless network for a control system involving a constraint on a data update cycle.

An example of the time-division synchronous communication scheme is Patent Literature 1. Patent Literature 1 discloses a technique that enables synchronous communications with no interference among wireless communication devices by performing communication so that each transmission or reception timing falls within an allotted time with a fixed length.

An example of a path switching scheme against a failure or a fault resulting from a communication error is Patent Literature 2. Patent Literature 2 discloses a technique that prevents data loss by switching a path when a wireless communication device fails, or when a fault occurs in wireless communication.

Furthermore, an example of a joining control scheme related to adding equipment to a network is Patent Literature 3. Patent Literature 3 discloses a technique that reduces processing loads and communication power consumption when a new terminal joins the network.

### Citation List

### Patent Literatures

Patent Literature 1: Jpn. Pat. Appln. KOKAI Publication No. 2011-176888
Patent Literature 2: Jpn. Pat. Appln. KOKAI Publication No. 2005-354626
Patent Literature 3: Jpn. Pat. Appln. KOKAI Publication No. 2005-80235

### Summary of Invention

### Technical Problem

When available wireless channels (wireless communication bands) in the entire network based on the time-division synchronous communication scheme are limited to one band, the entire single multi-hop wireless network needs to share a single schedule. Under this condition, a total duration during which the schedule for the multi-hop wireless network is complete (the duration is hereinafter referred to as one cycle time) is determined based on "one cycle time = the number of all communication tasks in the network × an allotment unit time. Communication data on the network is updated every cycle time, and thus, a data update period = one cycle time.

Many of the systems adopting the time-division synchronous communication scheme are intended to complete transmitting data held by individual wireless communication devices to other devices within a given limit time (maximum update cycle). To achieve this, a mechanism is needed which allows the time from the final communication before occurrence of an error until the first communication after restoration (the maximum update cycle for error occurrence) to be prevented from exceeding a given limit time. Therefore, a communication device provided in such a system needs to have the capability of restoring communication within a given time unless the communication device is malfunctioning.

A technique is known which avoids communication interruption by switching a communication path when a communication error occurs. However, the existing technique fails to ensure a completion time for path switching.

A mechanism is also needed which also allows, when a new device is added to a system based on the time-division synchronous communication scheme, the time, from the final communication before the addition of the device until the first communication after the addition of the equipment and the communication cycle after the addition of the equipment, to be prevented from exceeding a given limit time (the maximum update cycle at the time of addition).

A technique is known which allows a network to be reconstructed without interrupting communications in the entire system, and with processing loads on particular terminals for communication control kept low when a new terminal is added to the system. However, the existing technique is problematic in that the technique fails to maintain periodicity after the network is reconstructed.

An object is to provide a wireless communication device, a wireless communication system, and a wireless communication method which enable autonomous creation of a transmission and reception schedule that helps to avoid communication interference in the network, thus allowing the maximum update cycle to be prevented from exceeding a given limit time without interrupting communications even when any wireless communication device fails or a communication error occurs.

### Solution to Problem

According to an embodiment, a wireless communication device is applicable to a wireless communication system having a plurality of wireless communication devices. The wireless communication device includes a wireless section, a storage section, a communication control section, a response confirmation section and a schedule modification section. The wireless section executes a communication task in which the wireless communication device transmits and receives a wireless signal to and from another wireless communication device. The storage section stores schedule information indicative of a time when the communication task is permitted to be executed. The communication control section controls execution of the communication task based on the schedule information. The response confirmation section confirms a reception response from the another wireless communication device. The schedule modification section modifies the schedule information based on a result for the reception response from the response confirmation section.

### Brief Description of Drawings

FIG. 1 is a diagram illustrating an example of a wireless communication system according to a first embodiment.
FIG. 2 is a diagram illustrating an example of a network configuration of an external system.
FIG. 3 is a functional block diagram illustrating an example of a wireless communication device.
FIG. 4 is a functional block diagram illustrating an example of a wireless communication device (main device).
FIG. 5 is a diagram illustrating an example of schedule information.
FIG. 6 is a diagram illustrating an example of the schedule information illustrated in FIG. 5 to which bypass nodes have been added.
FIG. 7 is a diagram illustrating an example of schedule information for a case where broadcast communication is performed in a downlink direction.
FIG. 8 is a flowchart illustrating an example of a receiving process procedure for a wireless communication device according to a second embodiment.
FIG. 9 is a flowchart illustrating an example of a transmitting process procedure for the wireless communication device according to the second embodiment.
FIG. 10 is a diagram illustrating an example of a path switching process according to the second embodiment.
FIG. 11 is a diagram illustrating an example of a setting screen displayed on a maintenance terminal according to a second embodiment.
FIG. 12 is a flowchart illustrating an example of an effect of a schedule modification section of a wireless communication device according to a third embodiment.
FIG. 13 is a diagram illustrating an example of a result screen displayed on a maintenance terminal according to a third embodiment.
FIG. 14 is a diagram illustrating an example of a path switching process according to a fourth embodiment.

### Description of Embodiments

A wireless communication device, a wireless communication system, and a wireless communication method according to the present embodiment will be described below with reference to the drawings.

### (First Embodiment)

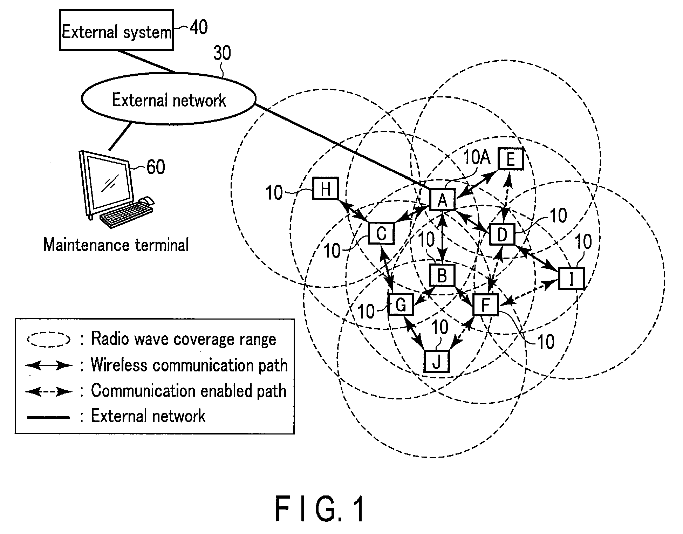

FIG. 1 is a diagram illustrating an example of a wireless communication system having wireless communication devices according to a first embodiment. In the wireless communication system, a multi-hop-type wireless network (multi-hop wireless network) is constructed using a plurality of wireless communication devices A to J. The wireless communication system comprises, as elements outside the wireless network, an external network 30, an external system 40 connected to the wireless network via the external network 30, and a maintenance terminal 60 that sets an operation of the wireless network. The external network 30 is connected to the present system via a wireless communication device 10A operating as a main device.

As illustrated in FIG. 1, the wireless communication devices that are present within respective radio wave coverage ranges autonomously construct wireless communication paths. In this case, the wireless communication devices B to J are assumed to be wireless communication devices 10 (described below). The wireless communication device A is assumed to be a wireless communication device 10A (described below) and to function as the main device.

A tree-type topology centered around the wireless communication device A is illustrated in FIG. 1. Instead of the tree-type topology, a mesh-type topology is applicable in which the wireless communication devices A to J are connected together via a plurality of communication paths.

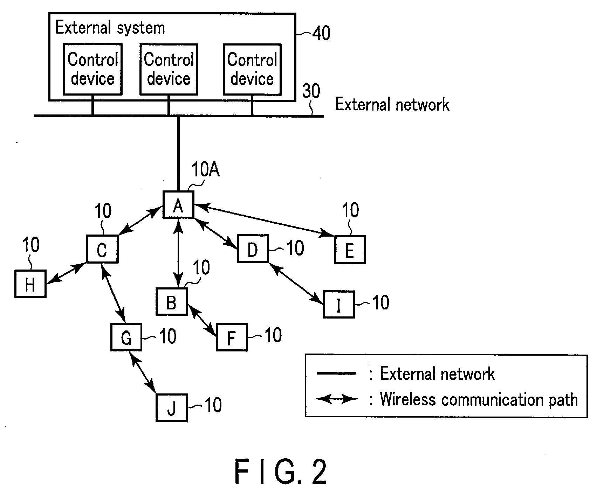

FIG. 2 illustrates an example of a network configuration including the external system 40 and the wireless communication system. As illustrated in FIG. 2, the external system 40 may include one or more control devices. The multi-hop wireless network may be used for, for example, control system applications in a social infrastructure field.

Input/output devices, sensors and motors for example, are connected to the wireless communication devices A to J.

For example, control devices in the external network 30 collect sensor information from the wireless communication devices A to J via the external network 30. The control devices may transmit control signals to the wireless communication devices A to J via the external network 30 based on the collected sensor information, allowing the motors and the like to be controlled.

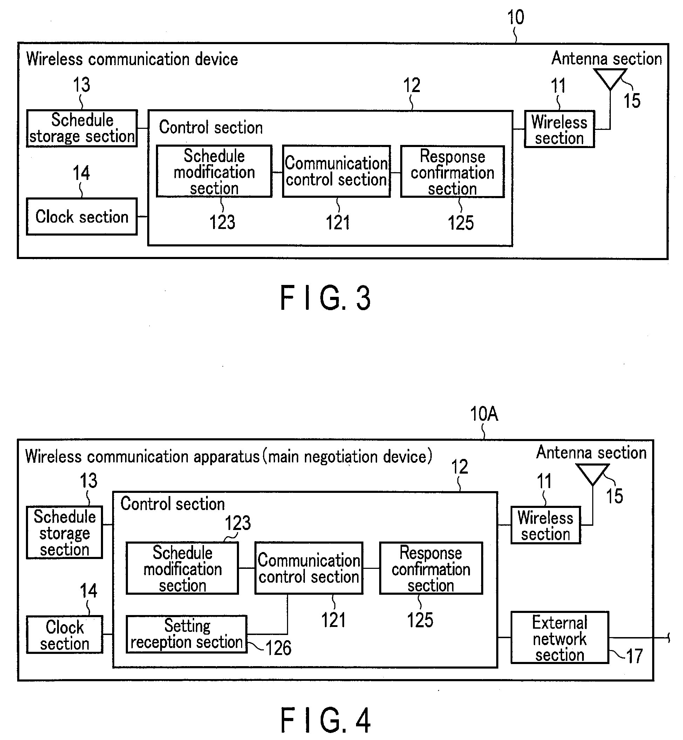

FIG. 3 is a functional block diagram illustrating an example of the wireless communication device 10. The wireless communication device 10 has a wireless section 11, a control section 12, a schedule storage section 13, a clock section 14, and an antenna section 15. A wireless network constructing function to autonomously construct a multi-hop-type wireless network may be contained in the control section 12, or provided at another position in the wireless communication device 10.

The wireless section 11 transmits and receives, via the antenna section 15, wireless signals to and from other wireless communication devices that are present within the radio wave coverage range of the wireless communication device 11. The schedule storage section 13 stores schedule information indicative of execution timings (times) for communication tasks in the wireless signals.

The schedule information is shared among the wireless communication devices A to J belonging to the system. In other words, all the wireless communication devices in the multi-hop wireless network hold common schedule information.

The clock section 14 generates a reference time used to control the execution timings for the communication tasks in the wireless signals, based on a common clock used in the entire system. The reference time is assumed to be synchronous among the wireless communication devices A to J belonging to the system.

The control section 12 includes a communication control section 121, a schedule modification section 123, and a response confirmation section 125. The communication control section 121 manages one cycle time needed to execute all the communication tasks recorded in the schedule information, and performs fixed-cycle transmission utilizing a time allotted to the communication control section 121.

The response confirmation section 125 allows the wireless communication device to communicate with a wireless communication device adjacent to the wireless communication device (adjacent device) to acquire information on the adjacent device in order to confirm the status of communication between the wireless communication device 10 and the adjacent device.

The schedule storage section 123 allots a free time in the schedule information to the communication task of the adjacent device to modify the schedule information based on the information of the adjacent device acquired by the response confirmation section 125.

FIG. 4 is a functional block diagram illustrating an example of the wireless communication device 10A functioning as a main device. The wireless communication device 10A functions as a device mainly controlling a time negotiation procedure. The wireless communication device 10A also functions as a connection gateway device between the external network 30 and the wireless network.

The wireless communication device 10A has an external network section 17 in addition to the wireless section 11, the control section 12, the schedule storage section 13, the clock section 14, and the antenna section 15. The external network section 17 is a connection interface between the wireless network and the external network 30. The wireless communication device 10A with the external network section 17 functions as a gateway that mediates data transmission and reception between the wireless network and the external system.

The control section 12 of the wireless communication device 10A includes a setting reception section 126 in addition to the communication control section 121, the schedule modification section 123, and the response confirmation section 125. The setting reception section 126 receives settings such as the maximum update cycle from the maintenance terminal 60 and the like. The setting of the maximum update cycle is indicative of a constraint condition for one cycle time needed to execute all the communication tasks recorded in the schedule information.

Next, a time negotiation procedure in the wireless communication system configured as above will be described. The wireless communication devices 10 and 10A perform wireless communication with no communication interference using the time negotiation procedure for embedding the communication task of each wireless communication device in the schedule information shared among the wireless communication devices.

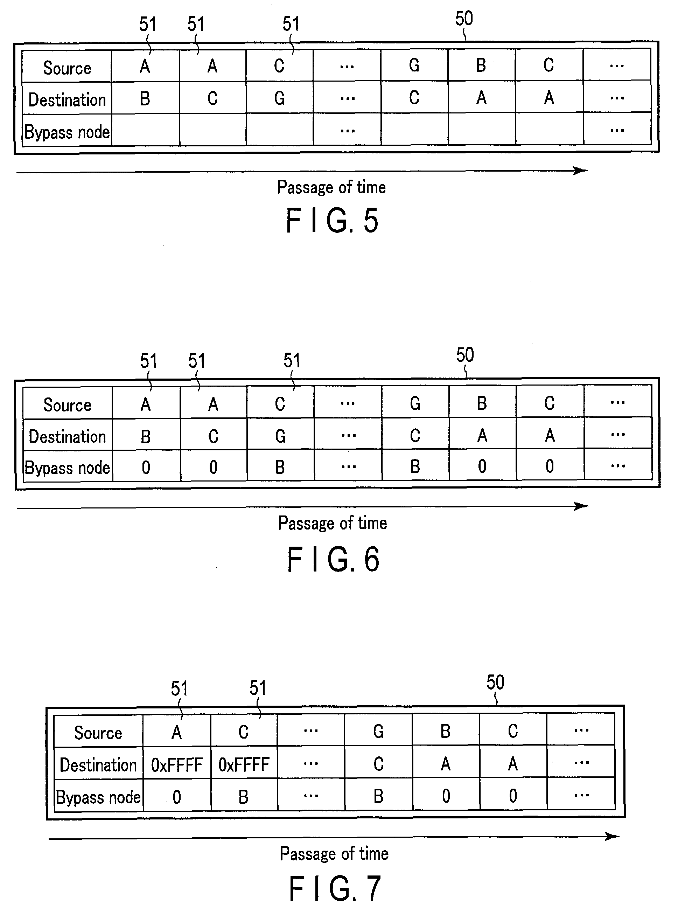

FIG. 5 is a diagram illustrating an example of schedule information. Schedule information 50 is indicative of execution timings for communication tasks shared by the wireless communication devices 10 and 10A belonging to the present system. The individual communication tasks are executed during times 51 specified in the schedule information 50. The communication tasks specified for the different times 51 are transmitted during the independent times and are thus prevented from affecting the mutual wireless communications.

In this case, the "time" in the time 51 corresponds to a period of time of a predetermined length, for example, a time slot or a time frame.

Furthermore, the wireless communication devices 10 and 10A recognize wireless communication paths constructed by a wireless network constructing function via communications among the wireless communication devices provided by the wireless network constructing function, before time negotiation is executed. The wireless communication device 10A functioning as the main device recognizes all the wireless paths in the wireless network.

For example, in FIG. 1, the wireless communication device A recognizes that the wireless communication device A can communicate with each of the wireless communication devices B, C, D, and E. Furthermore, the wireless communication device A recognizes that the wireless communication devices G and H are connected to the wireless communication device C, and that the wireless communication device J is further connected to the wireless communication device G.

In the time negotiation procedure, first, the wireless communication device A operating as the main device performs allotment of the times 51 in the schedule information 50. The schedule modification section 123 of the wireless communication device 10A allots unallotted times in the schedule information to the communication tasks between the wireless communication device 10A and the wireless communication devices (in FIG. 1, the wireless communication devices B to J) having wireless communication paths to the wireless communication device 10A.

For example, the order of allotment is such that, in a downlink direction in which transmitted data from the wireless communication device A is transmitted to a terminal device in the wireless network, the devices are recorded in order of increasing distance to the wireless communication device A on the paths. In an uplink direction in which data is transmitted from each of the wireless communication devices to the wireless communication device A, the devices are recorded in order of decreasing distance to the wireless communication device A on the paths.

Thus, in a wireless communication system in which data is transferred among nodes similar to a bucket brigade, downlink data from the wireless communication device A is smoothly transferred down to the terminal of the wireless network similar to a bucket brigade as long as the times are allotted to the nodes in order of increasing distance to the wireless communication device A.

Uplink data toward the wireless communication device A is smoothly transferred up to the terminal of the wireless network similar to a bucket brigade as long as the times are allotted to the nodes in order of decreasing distance to the wireless communication device A.

FIG. 5 illustrates, with a particular focus on the relations among the wireless communication devices A, B, C, and G, a state where the unallotted times have been allotted to the uplink and downlink communication tasks for all of the wireless communication devices.

The wireless communication device A further allots the times 51 specified in the schedule information 50 to bypass node information as information on bypass paths. In the example illustrated in FIG. 1, on paths from the device G to the device A, both the device B and the device C are positioned to be able to perform transmission and reception to and from the device A and the device G in terms of the radio wave coverage range. For both the device B and the device C, the device A is a higher device on the communication path, and the device G is a lower device on the communication path. In this manner, the devices involving the same higher and lower devices have a relation in which the devices can be recorded in the schedule information 50 as bypass nodes for a case where a certain fault occurs in communication.

As illustrated in FIG. 6, for each of the times 51, the wireless communication device A records the number of the device having a bypass node relationship with the source device in the schedule information 50 as bypass node information if the time is intended for downlink communication. Furthermore, for each of the times 51, the wireless communication device A records in the schedule information 50 the number of the devices having a bypass node relationship with the destination device as bypass node information if the time is intended for uplink communication.

For example, in FIG. 6, for the time involving the source = C and the destination = G, B is recorded as a bypass node. This means that the time is intended for downlink communication, and the source device C and the device B have the same higher device A and lower device G. Thus, even if communication with the device C on the communication path from A to G is interrupted, data transmission from A to G can be achieved via the device B.

For recording in the schedule information 50, besides one-to-one communication, broadcast transmission from a single source device to a plurality of nodes within a signal coverage range from the source device is allowed. FIG. 7 illustrates an example of schedule information on the wireless communication devices A, B, C, and G for a case where downlink communication in the configuration illustrated in FIG. 1 is a broadcast communication.

In FIG. 7, the time 51 involving the destination = 0xFFFF represents broadcast communication. For example, in the downlink communication from the wireless communication device A in FIG. 7, the wireless communication device C serves to perform a second stage of broadcast communication. However, if the wireless communication device C is damaged, the wireless communication device B performs broadcast issuance.

Upon completing all the communication tasks and allotment of the bypass node information, the wireless communication device 10A functioning as the main device transmits the schedule information to all of the wireless communication devices having wireless communication paths to the wireless communication device 10A. After a fixed-cycle (hereinafter fixed-cycle) communication performed at predetermined cycles is started, if communication tasks associated with each wireless communication device 10 and the wireless communication device 10A are recorded for the times described in the schedule information, the wireless communication device 10 and 10A execute relevant transmitting and receiving processes.

As described above, the first embodiment enables autonomous creation of a transmission and reception schedule that allows communication interference in the multi-hop wireless network to be avoided. Moreover, a wireless communication system can be implemented in which the recorded bypass node information allows, even if a certain fault occurs in communication, data transmission to be reliably achieved via the bypass path.

### (Second Embodiment)

A wireless communication system according to a second embodiment has a path switching function accomplished within a given time and allowing the fixed-cycle communications in the entire system to continue even when a wireless communication device located at a relay point on a communication path fails or a communication error occurs. In the second embodiment, bypass nodes are pre-recorded in the schedule information as described in the first embodiment.

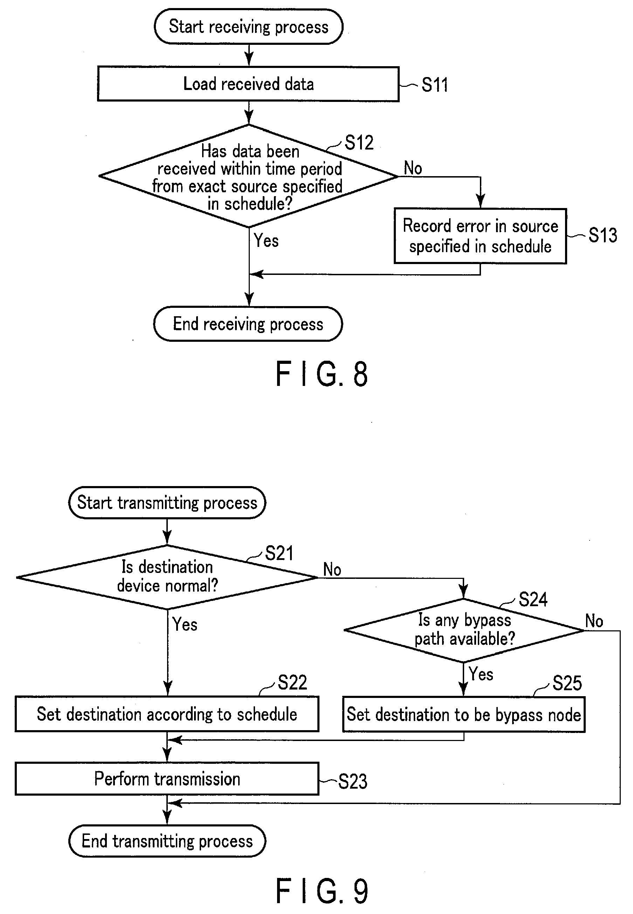

Each wireless communication device detects an error in the source communication device during a receiving operation of the wireless communication device. FIG. 8 illustrates a flowchart of a receiving process procedure in the wireless communication devices 10 and 10A. Upon loading received data (step S11), each wireless communication device determines whether the data has been received within an appropriate time from the exact communication source specified in the schedule contained in the schedule information (step S12). If the data has not been received correctly (in step S12, Yes), the wireless communication device records the communication source schedule error in the schedule storage section 13 of the wireless communication device (step S13).

FIG. 9 illustrates a flowchart of a transmitting process procedure in the wireless communication devices 10 and 10A. Each wireless communication device references the schedule information to execute a transmitting process during the time for which the transmission task of the wireless communication device is recorded. At that time, the wireless communication device determines whether the destination device is normal (step S21). If the destination device is normal (in step S21, Yes), the wireless communication device sets the destination in accordance with the schedule information (step S22) and executes a transmitting process (step S23).

On the other hand, in the above-described receiving process, if an error is recorded for the destination device, the wireless communication device checks the schedule information for bypass node information for the corresponding time to determine whether or not a bypass path is available (step S24).

In this case, if bypass node information is recorded (for example, data other than "0" is recorded in the bypass node information in FIG. 6), the wireless communication device changes the destination device to the bypass node recorded for the corresponding time and sets the bypass node to be the destination device (step S25), and executes a transmitting process (step S23).

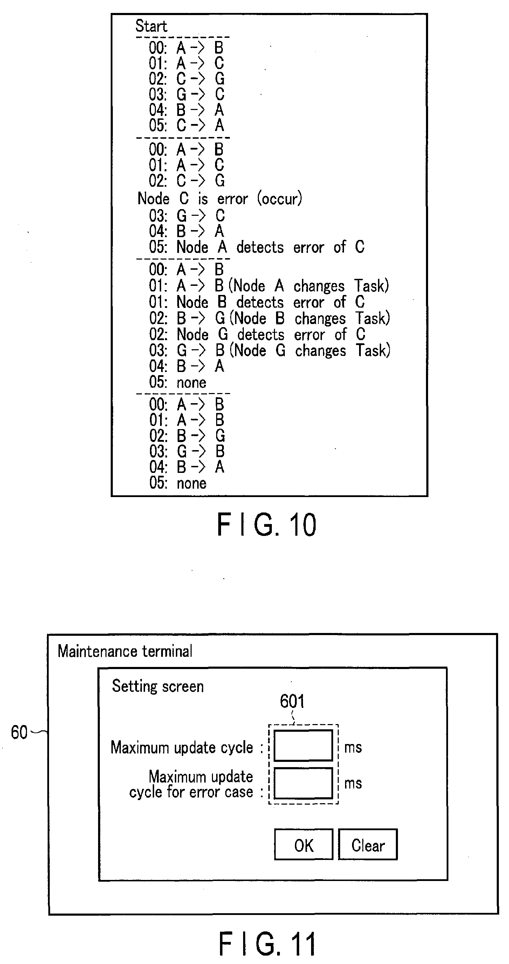

By way of example, FIG. 10 illustrates a flow of a path switching process (the schedule is omitted for the devices other than the devices A, B, C, and G) executed when the device C fails during the fixed-cycle communication specified in the schedule information 50 illustrated in FIG. 6. In this case, the fixed-cycle communication is performed six times in which time numbers 00 to 05 correspond to one cycle.

At the time number 05 during the second cycle, the device A recognizes that no normal reception has been obtained from the device C to detect a failure in the device C. Then, the device A provides, to the device B, a transmission otherwise provided to the device C during a time (time number 01) in the third cycle involving the device C specified as the destination device. Moreover, the device B detects at that time a failure in the device C, which is the original destination, because of reception from a communication source that is not in the schedule. The device B provides transmission to the device G rather than to the device C during the time (time number 02) for transmission from the device C to the device G. The device G detects at that time a failure in the device C, which is the original destination, because of reception from the communication source B that is not in the schedule. In this manner, the failure in the device C is transmitted to all the nodes on the paths, completing path switching.

As illustrated in FIG. 10, data held in the device G is transmitted to the device A through a path G→C→A during the first cycle. During the second cycle when the device C fails, the data in the device G does not reach the device A, resulting in a failure in the fixed-cycle communication. However, during the third cycle, the data is transmitted to the device A again through a path G→B→A. Therefore, the above-described maximum update cycle for when an error occurs is two cycles.

As described above, the second embodiment can implement a wireless communication system that allows a communication interruption time involved in communication path switching to be prevented from exceeding two cycles of fixed-cycle transmission even when a wireless communication device located at a relay point on a communication path fails, or a communication error occurs.

### (Third Embodiment)

In a third embodiment, the wireless communication device 10A operating as the main device provides an operation setting function to the maintenance terminal 60 outside the wireless network. The wireless communication device 10A has the setting reception section 126, illustrated in FIG. 4, to accept the setting of the maximum update cycle for when an error occurs from the maintenance terminal 60 outside the wireless network.

The wireless communication device 10A is connected to the maintenance terminal 60 via the external network 30 using the external network section 17. The setting reception section 126 provides the operation setting function of the wireless communication device 10A to the maintenance terminal 60. Using the operation setting function and the path switching function accomplished within the given time as described in the second embodiment, the present system enables the fixed-cycle communications in the entire system to continue without exceeding the maximum update cycle for when an error occurs set by a user even when the wireless communication device fails, or a communication error occurs.

Specifically, the setting reception section 126 is implemented as an HTTPd (Web server) or a similar function. In response to a request from the maintenance terminal 60, the setting reception section 126 transmits information on the wireless communication device 10A and the entire wireless network to the maintenance terminal 60. The setting reception section 126 performs operation setting on the wireless communication device 10A in conjunction with an operation performed by the maintenance terminal 60.

FIG. 11 illustrates a setting screen for the wireless communication device 10 and the entire wireless network which is displayed on the maintenance terminal 60, which receives information from the setting reception section 126.

The setting screen illustrated in FIG. 11 has a setting input section 601 for the maximum update cycle and the maximum update cycle for when an error occurs. The user of the present system can set, in the setting input section 601, the maximum update cycle for a state where the system is normally operative and the maximum update cycle for when an error occurs, including the status of a failure in a wireless communication device in the system.

The maximum update cycle is the total duration from the last data transmission (or reception) until the latest data transmission (or reception) by a certain device during fixed-cycle communication when focus is placed on each of the wireless communication devices 10 and 10A.

The maximum update cycle for when an error occurs is the maximum update cycle for cases including a communication error, and means the maximum duration from the final data transmission (or reception) by a certain device immediately before a failure occurs in the system until the first data transmission (or reception) after recovery of the fixed-cycle communication.

In the third embodiment, the schedule modification section 123 of each of the wireless communication devices 10 and 10A determines whether or not the total duration in the schedule information exceeds the maximum update cycle. Furthermore, the schedule modification section 123 of each of the wireless communication devices 10 and 10A determines whether or not the maximum duration including a time needed to replace the communication task exceeds the maximum update cycle for when an error occurs.

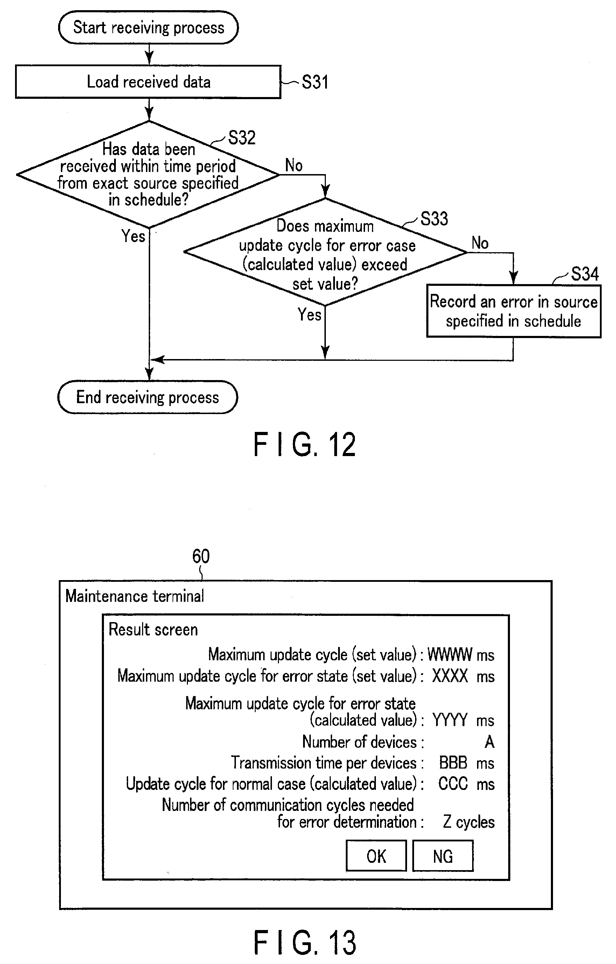

As illustrated in FIG. 12, each wireless communication device in the third embodiment loads received data (step S31) and then determines whether the data has been received within an appropriate time from the scheduled communication source specified in the schedule information (step S32). If the data has not been received correctly (in step S32, No), the wireless communication device determines whether a calculated value for the maximum update cycle for when an error occurs exceeds a set value for the maximum update cycle for when an error occurs (step S33).

If the calculated value for the maximum update cycle for when an error occurs exceeds the set value for the maximum update cycle for when an error occurs, the wireless communication device records, in the schedule storage section 13 of the wireless communication device (step S34), an error in the source specified in the schedule.

That is, the schedule modification section 123 of each of the wireless communication devices 10 and 10A does not record the determination of an error in the source in the path switching process simply based on a reception error during the single corresponding time during the corresponding cycle (reception obtained from an device different from the source set for the corresponding time, or a failure in reception) as in the second embodiment.

In the third embodiment, the schedule modification section 123 determines to not record an error in the source, even if a reception error occurs during the corresponding time during the corresponding cycle to the extent that the maximum update cycle expected, based on an error in reception from the same source, does not exceed the maximum update cycle for error occurrence - one cycle. In this case, the maximum update cycle means that, assuming an error is recorded during the current cycle, an expected duration from the last successful reception until a successful reception is followed by completion of path switching during the next cycle.

In other words, the schedule modification section 123 in the third embodiment increases a communication frequency used for communication error determination for the wireless communication device to the extent that the predicted maximum cycle is equal to or shorter than the maximum update cycle for when an error occurs.

As described above, in the third embodiment, even if the system has a constraint on the maximum update cycle for when an error occurs, the wireless communication device does not perform communication error determination until the needed cycle time from occurrence of a reception error until restoration of communication resulting from path switching exceeds the maximum update cycle for when an error occurs. Thus, if a communication error temporarily occurs in the device but the communication is quickly restored, then the device can join the fixed-cycle communication immediately after the restoration without performing path switching.

Consequently, a wireless communication system for the multi-hop wireless network having a constraint on the maximum update cycle can be provided which allows, in regard to a short-time communication error, the fixed-cycle communication to be resumed within one cycle after restoration from the error without violating the constraint on the maximum update cycle for when an error occurs set by the user.

Furthermore, the setting reception section 126 of the wireless communication device 10A in the third embodiment has a function to transmit the maximum update cycle and the maximum update cycle for when an error occurs set by the user, the maximum update cycle for when an error occurs calculated by the schedule modification section 123 (calculated value), and the number of cycles needed for the error determination to the maintenance terminal 60 as illustrated in FIG. 13. These pieces of information are displayed on a result screen.

Consequently, the user can check whether the update cycle calculated by the system is shorter or longer than the condition for the set value of the maximum update cycle, the number of cycles needed for the error determination, and other types of information.

Therefore, the third embodiment can present, for the multi-hop wireless network involving a constraint on the maximum update cycle, a criterion to allow the user to determine whether the fixed-cycle communication based on the schedule information created by the present system satisfies an operating environment desired by the user.

### (Fourth Embodiment)

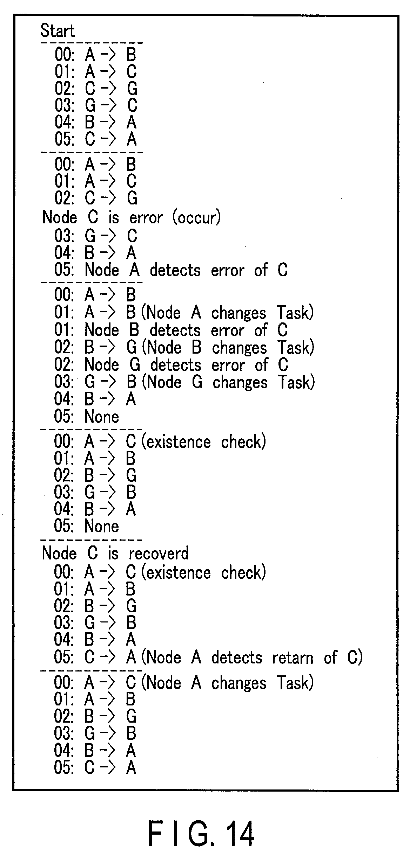

FIG. 14 is a diagram illustrating an example of a path switching process according to a fourth embodiment. The response confirmation section 125 of each of the wireless communication devices 10 and 10A in the fourth embodiment utilizes a redundant time on the schedule to issue a presence check message ("presence check" at a time number 00 during the fourth and fifth cycles in FIG. 14) to a failing device after path switching intended to deal with a failure in another wireless communication device or a fault in communication. The presence check message includes schedule information.

A wireless communication device that has been restored from a communication error or replaced with a normal unit can acquire schedule information upon receiving the presence check message from the response confirmation section 125. The communication control section 121 of the restored wireless communication device resumes fixed-cycle transmission utilizing a time allotted to the wireless communication device before a failure occurs, based on the acquired schedule information.

A wireless communication device having received data through the resumed fixed-cycle transmission recognizes that the failing device has been restored ("Node A detects return of C" at a time number 05 during the fifth cycle in FIG. 14). Then, the schedule modification section 123 of the wireless communication device replaces the communication task of the device on the bypass path with the communication task for the restored device ("Node A changes Task at a time number 00 during the sixth cycle in FIG. 14).

As described above, in the fourth embodiment, when a wireless communication device is restored for which communication has been interrupted due to a failure or a fault in communication, the restored wireless communication device can rejoin the fixed-cycle communication without interrupting or delaying the fixed-cycle communications in the entire wireless network.

The several embodiments have been described. The embodiments are presented as examples and are not intended to limit the scope of the invention. These novel embodiments can be implemented in various other forms, and various omissions, replacements, and changes may be made to the embodiments without departing from the spirit of the invention. The embodiments and variations thereof are included in the scope and spirit of the inventions set forth in the claims and equivalents thereof.

Furthermore, the following can be implemented as hardware such as integrated circuits: the wireless section 11, the control section 12, the schedule storage section 13, the clock section 14, the external network section 17, the communication control section 121, the schedule modification section 123, the response confirmation section 125, and the setting reception section 126. These sections can also be implemented as software programs modularized as software.

## Claims

1. A wireless communication device applicable to a wireless communication system having a plurality of wireless communication devices, the wireless communication device being **characterized by** comprising:
a wireless section configured to execute a communication task in which the wireless communication device transmits and receives a wireless signal to and from another wireless communication device;
a storage section configured to store schedule information indicative of a time when the communication task is permitted to be executed;
a communication control section configured to control execution of the communication task based on the schedule information;
a response confirmation section configured to confirm a reception response from the another wireless communication device; and
a schedule modification section configured to modify the schedule information based on a result for the reception response from the response confirmation section.

2. The wireless communication device according to claim 1, **characterized in that** the schedule modification section allots a communication task between the wireless communication device and an device having a wireless communication path to the wireless communication device to a time in the schedule information.

3. The wireless communication device according to claim 2, **characterized in that** the schedule information further includes information on a bypass path on the wireless communication path for each time allotted to the communication task, and
when a communication error occurs in an adjacent wireless communication device on the wireless communication path, the schedule modification section replaces the communication task of the device having the communication error with the communication task of the device on the bypass path, based on information on the bypass path.

4. The wireless communication device according to claim 2, **characterized by** further comprising:
an external network section configured to connect to an external network; and
a setting reception section configured to provide a setting function related to execution of the communication task via the external network.

5. The wireless communication device according to claim 4, **characterized in that** the setting reception section accepts a setting of a maximum update period needed to execute all communication tasks recorded in the schedule information, and
the schedule modification section determines whether or not a total duration for the schedule information exceeds the maximum update cycle.

6. The wireless communication device according to claim 4, **characterized in that** the setting reception section accepts a setting of a maximum update cycle for an error occurrence which is a maximum update cycle involving a case of a communication error in the wireless communication device, and
the schedule modification section determines whether a maximum duration including a time needed to replace the communication task exceeds the maximum update cycle for the error occurrence when a communication error occurs in the adjacent wireless communication device on the wireless communication path.

7. The wireless communication device according to claim 6, **characterized in that** the schedule modification section increases a number of communication cycles used to make a determination for the communication error to an extent that the maximum duration is equal to or shorter than the maximum update cycle for the error occurrence.

8. The wireless communication device according to any one of claims 5 to 7, **characterized in that** the setting reception section presents at least one of the total duration calculated by the schedule modification section, the maximum duration, and the number of communication cycles used for determination for the communication error.

9. The wireless communication device according to claim 3, **characterized in that** the response confirmation section determines that the wireless communication device with the communication error has been restored to a communication enabled state, and
the schedule modification section replaces the communication task for the device on the bypass path with a communication task for the device determined to have been restored as a result of reception of a fixed-cycle transmission resumed by the restored device.

10. A wireless communication system comprising the wireless communication device according to any one of claims 1 to 9.

11. A method used for a wireless communication device applicable to a wireless communication system having a plurality of wireless communication devices, the wireless communication method being **characterized by** comprising:
executing a communication task of transmitting and receiving a wireless signal to and from the another wireless communication device;
storing schedule information indicative of a time when the communication task is permitted to be executed;
controlling execution of the communication task for the wireless signal based on the schedule information;
confirming a reception response from the another wireless communication device; and
modifying the schedule information based on a result for the reception response from the response confirmation section.
